# EUROPEAN PATENT SPECIFICATION

(11) **EP 4 642 848 B1**
(45) Date of publication and mention of the grant of the patent: **09.12.2026**
(21) Application number: 23855766.4
(22) Date of filing: 27.12.2023
(51) Int. Cl.: C08L 23/04, C08L 23/14, C08L 29/14, C08L 51/06, C08K 7/14

(54) **CONTINUOUS GLASS FIBER REINFORCED THERMOPLASTIC MATERIAL**
ENDLOSGLASFASERVERSTÄRKTES THERMOPLASTISCHES MATERIAL
MATÉRIAU THERMOPLASTIQUE RENFORCÉ PAR DES FIBRES DE VERRE CONTINUES

(30) Priority: 30.12.2022 US 202263436217 P
(43) Date of publication of application: 05.11.2025
(73) Proprietor: Avient Corporation, Avon Lake, Ohio 44012 (US)
(72) Inventor: CARSON, Sidney, Avon Lake, Ohio 44012 (US); KLUG, Jennifer, Avon Lake, Ohio 44012 (US); METAXAS, Athena, Avon Lake, Ohio 44012 (US); ANGEL, Juan, Avon Lake, Ohio 44012 (US)
(74) Representative: Appleyard Lees IP LLP
(86) International application number: PCT/US2023/086040
(87) International publication number: WO 2024/145359

(56) References cited:
- CN-A- 104 371 431
- CN-A- 109 456 534
- CN-A- 111 117 152

## Description

### CLAIM OF PRIORITY

This application claims the benefit of U.S. Provisional Patent Application Serial No. 63/436,217 bearing Attorney Docket Number 1202228 and filed on December 30, 2022.

### TECHNICAL FIELD

Embodiments of the present disclosure are generally related to continuous glass fiber reinforced thermoplastic material, and are specifically related to continuous glass fiber reinforced thermoplastic materials including a polymer matrix comprising a polyvinyl butyral component, a polyolefin component, and a maleic anhydride-functional compatibilizer. CN109456534 relates to a polypropylene material resistant to high temperature creep and a method of preparing the same.

### BACKGROUND

Continuous glass fiber reinforced thermoplastic materials including a polyolefin (e.g., polypropylene) are widely used in automotive, appliance, furniture, and electrical applications due to desirable mechanical properties (e.g., tensile and flexural strength and modulus). However, there is a growing demand for continuous glass fiber reinforced thermoplastic materials with improved adhesion and enhanced sustainability.

Accordingly, a need exists for continuous glass fiber reinforced thermoplastic materials with advantageous mechanical properties (i.e., tensile and flexural strength and modulus) and adhesion. It is also desirable to include components from recycled sources.

### SUMMARY

Embodiments of the present disclosure are directed to continuous glass fiber reinforced thermoplastic materials including a polymer matrix comprising a polyvinyl butyral component, a polyolefin component, and a maleic anhydride-functional compatibilizer.

According to one embodiment, a continuous glass fiber reinforced thermoplastic material is provided. The continuous glass fiber reinforced thermoplastic material comprises a polymer matrix and 50 wt% to 80 wt% of a plurality of continuous glass fibers, based on a total weight of the continuous glass fiber reinforced thermoplastic material. The polymer matrix comprises, based on a total weight of the polymer matrix, 20 wt% to 40 wt% of a polyvinyl butyral component, 50 wt% to 79.5 wt% of a polyolefin component, and 0.5 wt% to 5 wt% of a maleic anhydride-functional compatibilizer. The polyolefin component comprises polyethylene, polypropylene, or a combination thereof.

Additional features and advantages of the embodiments described herein will be set forth in the detailed description which follows, and in part will be readily apparent to those skilled in the art from that description or recognized by practicing the embodiments described herein, including the detailed description, which follows and the claims.

### DRAWINGS

FIG. 1 is a schematic, cross-sectional view of a laminate, according to one or more embodiments shown and described herein; and
FIG. 2 is a schematic, cross-sectional view of an over molded article, according to one or more embodiments shown and described herein.

### DETAILED DESCRIPTION

Reference will now be made in detail to various embodiments of continuous glass fiber reinforced thermoplastic materials, specifically continuous glass fiber reinforced thermoplastic material comprising a polymer matrix and 50 wt% to 80 wt% of a plurality of continuous glass fibers, based on a total weight of the continuous glass fiber reinforced thermoplastic material. The polymer matrix comprises, based on a total weight of the polymer matrix, 20 wt% to 40 wt% of a polyvinyl butyral component, 50 wt% to 79.5 wt% of a polyolefin component, and 0.5 wt% to 5 wt% of a maleic anhydride-functional compatibilizer. The polyolefin component comprises polyethylene, polypropylene, or a combination thereof.

The disclosure should not be construed as limited to the embodiments set forth herein. Rather, these embodiments are provided so that this disclosure will be thorough and complete, and will fully convey the subject matter to those skilled in the art.

### Definitions

Unless otherwise defined, all technical and scientific terms used herein have the same meaning as commonly understood by one of ordinary skill in the art. The terminology used in the disclosure herein is for describing particular embodiments only and is not intended to be limiting.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used in the specification and the appended claims, the singular forms "a," "an," and "the" are intended to include the plural forms as well, unless the context clearly indicates otherwise. Thus, for example, reference to "a" component includes aspects having two or more such components, unless the context clearly indicates otherwise.

The term "maintained mechanical properties," as described herein, refers to a tensile strength at break, a tensile modulus, and a flexural modulus within 20% and a flexural strength within 40% of a tensile strength at break, a tensile modulus, a flexural modulus, and flexural strength, respectively, of a similar continuous glass fiber reinforced thermoplastic material that is identical except that it does not include the polyvinyl butyral component.

The term "zero shear viscosity," as described herein, refers to the viscosity of a material when it is effective at rest, as measured according to ASTM D4440-15.

The term "flexural modulus," as described herein, refers the ratio of stress to strain in flexural deformation, as measured according to ASTM D790-17 at 23 °C and a rate of strain 0.05 in/min.

The term "flexural strength," as described herein, refers to the maximum bending stress that may be applied to a material before it yields, as measured according to ASTM D790-17 at 23 °C and a rate of strain 0.05 in/min.

The terms "tensile strength" and "tensile strength at break," as described herein, refers to the maximum stress that a material can withstand while stretching before breaking, as measured according to ASTM D638-14 at 23 °C and a rate of strain of 0.2 in/min.

The term "tensile modulus," as described herein, refers to the ratio of the stress along an axis over the strain along that axis, as measured according to ASTM D638-14 at 23 °C and a rate of strain of 0.2 in/min.

The term "melt flow rate," as described herein, refers to the ability of a material's melt to flow under pressure, as measured according to ASTM D1238 at the given temperature and weight.

The term "continuous fibers," as described herein, refers to a fiber that spans all or substantially all of a dimension of the CFR thermoplastic composition. The term "substantially all of a dimension," as used herein, refers to greater than 75% of a dimension of the CFR thermoplastic composition.

The term "average diameter," as described herein, refers to an average of the diameters of each of the fibers in the plurality of continuous fibers.

As discussed hereinabove, continuous glass fiber reinforced thermoplastic materials including a polyolefin (e.g., polypropylene) are widely used in automotive, appliance, furniture and electrical applications due to desirable mechanical properties (e.g., flexural modulus and strength). However, there is a growing demand for continuous glass fiber reinforced thermoplastic materials with improved adhesion and enhanced sustainability.

Polyvinyl butyral is widely used in adhesive and coating applications, such as automotive windshields and solar panels. However, reduced optical clarity of recycled polyvinyl butyral prevents reuse in laminated glass, such as automotive windshields. Moreover, the polarity of polyvinyl butyral may cause polyvinyl butyral to be immiscible with many commonly used polymers.

Disclosed herein are continuous glass fiber reinforced thermoplastic materials. Specifically, the continuous glass fiber reinforced thermoplastic materials disclosed herein include a polymer matrix comprising a polyvinyl butyral component, a polyolefin component, and a maleic anhydride-functional compatibilizer Advantageously, the continuous glass fiber reinforced thermoplastic material may have maintained mechanical properties (i.e., tensile and flexural modulus and strength) and improved adhesion. Moreover, the polyvinyl butyral component may be obtained from a recycled source. The polyvinyl butyral component imparts improved adhesion and allows for enhanced sustainability. The polyolefin component imparts the desired mechanical properties. The maleic anhydride-functional compatibilizer helps compatibilize the continuous glass fibers and the polyolefin component to ensure the maintained mechanical properties are achieved.

The continuous glass fiber reinforced thermoplastic materials disclosed herein may generally be described as comprising a polymer matrix comprising a polyvinyl butyral component, a polyolefin component, and a maleic anhydride-functional compatibilizer and a plurality of continuous glass fibers.

### Polymer Matrix

As described hereinabove, the continuous glass fiber reinforced thermoplastic materials comprise a polymer matrix within which the plurality of continuous glass fibers is dispersed. The polymer matrix includes a polyvinyl butyral component, a polyolefin component, and a maleic anhydride-functional compatibilizer.

In embodiments, the continuous glass fiber reinforced thermoplastic material may comprise 20 wt% to 50 wt% of the polymer matrix, based on a total weight of the continuous glass fiber reinforced thermoplastic material, to ensure the desired mechanical properties are achieved (e.g., tensile and flexural modulus and strength). Accordingly, in embodiments, the continuous glass fiber reinforced thermoplastic material may comprise 20 wt% to 50 wt% of the polymer matrix, based on a total weight of the continuous glass fiber reinforced thermoplastic material. In embodiments, the amount of polymer matrix in the continuous glass fiber reinforced thermoplastic material may be, based on a total weight of the continuous glass fiber reinforced thermoplastic material, greater than or equal to 20 wt%, greater than or equal to 25 wt%, greater than or equal to 30 wt%, or even greater than or equal to 40 wt%. In embodiments, the amount of polymer matrix in the continuous glass fiber reinforced thermoplastic material may be, based on a total weight of the continuous glass fiber reinforced thermoplastic material, less than or equal to 50 wt% or even less than or equal to 45 wt%. In embodiments, the amount of polymer matrix in the continuous glass fiber reinforced thermoplastic material may be, based on a total weight of the continuous glass fiber reinforced thermoplastic material, from 20 wt% to 50 wt%, from 20 wt% to 45 wt%, from 25 wt% to 50 wt%, from 25 wt% to 45 wt%, from 30 wt% to 50 wt%, from 30 wt% to 45 wt%, from 35 wt% to 50 wt%, or even from 35 wt% to 45 wt%, or any and all sub-ranges formed from any of these endpoints.

### Polyvinyl Butyral Component

The polyvinyl butyral component included in the polymer matrix imparts improved adhesion and allows for enhanced sustainability of the continuous glass fiber reinforced thermoplastic material.

The polymer matrix may include a minimum amount of polyvinyl butyral component (e.g., greater than or equal to 20 wt%) to impart improved adhesion and allow for enhanced sustainability. The amount of the polyvinyl butyral component may be limited (e.g., less than or equal to 40 wt%) to ensure the desired mechanical properties are achieved (e.g., tensile and flexural modulus and strength).

Accordingly, in embodiments, the polymer matrix may comprise, based on a total weight of the polymer matrix, 20 wt% to 40 wt% of a polyvinyl butyral component. In embodiments, the polymer matrix may comprise, based on a total weight of the polymer matrix, 22 wt% to 35 wt% of the polyvinyl butyral component. In embodiments, the polymer matrix may comprise, based on a total weight of the polymer matrix, 24 wt% to 28 wt% of the polyvinyl butyral component. In embodiments, the amount of the polyvinyl butyral component in the polymer matrix may be, based on a total weight of the polymer matrix, greater than or equal to 20 wt%, greater than or equal to 22 wt%, or even greater than or equal to 24 wt%. In embodiments, the amount of the polyvinyl butyral component in the polymer matrix may be, based on a total weight of the polymer matrix, less than or equal to 40 wt%, less than or equal to 37 wt%, less than or equal to 35 wt%, less than or equal to 32 wt%, less than or equal to 30 wt%, or even less than or equal to 28 wt%. In embodiments, the amount of the polyvinyl butyral component in the polymer matrix may be, based on a total weight of the polymer matrix, from 20 wt% to 40 wt%, from 20 wt% to 37 wt%, from 20 wt% to 35 wt%, from 20 wt% to 32 wt%, from 20 wt% to 30 wt%, from 20 wt% to 28 wt%, from 22 wt% to 40 wt%, from 22 wt% to 37 wt%, from 22 wt% to 35 wt%, from 22 wt% to 32 wt%, from 22 wt% to 30 wt%, from 22 wt% to 28 wt%, from 24 wt% to 40 wt%, from 24 wt% to 37 wt%, from 24 wt% to 35 wt%, from 24 wt% to 32 wt%, from 24 wt% to 30 wt%, or even from 24 wt% to 28 wt%, or any and all sub-ranges formed from any of these endpoints.

Without wishing to be bound by theory, it is believed that the polarity of the polyvinyl butyral and the polyolefin component's non-polar structure may increase the compatibility of the resin structures with the continuous glass fibers inside individual layers as well as in between layers of a laminate, thereby improving adhesion and requiring more force to separate layers from each other.

In embodiments, the polyvinyl butyral component may comprise virgin polyvinyl butyral, recycled polyvinyl butyral, or a combination thereof. The term "virgin," as used herein, refers to a polyvinyl butyral component coming from a source other than a recycled source. The term "recycled," as used herein, refers to a polyvinyl butyral coming from a recycled source. As such, in embodiments in which the polyvinyl butyral comprises recycled polyvinyl butyral, the polyvinyl butyral component helps ensure enhanced sustainability of the continuous glass fiber reinforced thermoplastic material. Recycled polyvinyl butyral may have impurities and color that may result in undesired properties. Accordingly, in embodiments, the recycled polyvinyl butyral may be processed to remove impurities or adjust color prior to being added to the polymer blend.

In embodiments, the polyvinyl butyral component may comprise a plasticizer. For example, recycled polyvinyl butyral, plasticizer may comprise a plasticizer as a result of its previous application (e.g., safety glass interlayer for windshield). In embodiments, the plasticizer may comprise triethyleneglycol bis (2-ethylhexanoate), tetraethylene glycol di-n-heptanoate, dibutyl sebacate, dihexyl adipate, dioctyl adipate, hexyl cyclohexyl adipate, or a combination thereof.

In embodiments, the polyvinyl butyral component may comprise 0 wt% to 30 wt% of the plasticizer, based on a total weight of the polyvinyl butyral component. In embodiments, the polyvinyl butyral component may comprise 10 wt% to 30 wt% of the plasticizer, based on a total weight of the polyvinyl butyral component. In embodiments, the amount of plasticizer in the polyvinyl butyral component may be, based on a total weight of the polyvinyl butyral component, greater than or equal to 0 wt%, greater than or equal to 5 wt%, greater than or equal to 10 wt%, or even greater than or equal to 15 wt%. In embodiments, the amount of plasticizer in the polyvinyl butyral component may be, based on a total weight of the polyvinyl butyral component, less than or equal to 30 wt%, less than or equal to 25 wt%, or even less than or equal to 20 wt%. In embodiments, the amount of plasticizer in the polyvinyl butyral component may be, based on a total weight of the polyvinyl butyral component, from 0 wt% to 30 wt%, from 0 wt% to 25 wt%, from 0 wt% to 20 wt%, from 5 wt% to 30 wt%, from 5 wt% to 25 wt%, from 5 wt% to 20 wt%, from 10 wt% to 30 wt%, from 10 wt% to 25 wt%, from 10 wt% to 20 wt%, from 15 wt% to 30 wt%, from 15 wt% to 25 wt%, or even from 15 wt% to 20 wt%, or any and all sub-ranges formed from any of these endpoints.

In embodiments, the polyvinyl butyral component may be dusted with mineral fillers, such as talc and calcium carbonate. Accordingly, in embodiments, the polymer matrix may comprise less than or equal to 2.5 wt%, less than or equal to 2 wt%, less than or equal to 1.5 wt%, less than or equal to 1 wt%, or even less than or equal to 0.5 wt% mineral fillers, based on a total weight of the polymer matrix.

Suitable commercial embodiments of the polyvinyl butyral component comprising polyvinyl butyral from a recycled source and a plasticizer are available under the Shark Pellets brand, such as C2c, available from Shark Solutions.

### Polyolefin Component

The polyolefin component included in the polymer matrix imparts desired mechanical properties (e.g., tensile and flexural modulus and strength).

In embodiments, the polymer matrix may comprise, based on a total weight of the polymer matrix, 50 wt% to 79.5 wt% of the polyolefin component. In embodiments, the amount of the polyolefin component in the polymer matrix may be, based on a total weight of the polymer matrix, greater than or equal to 50 wt%, greater than or equal to 53 wt%, greater than or equal to 55 wt%, or even greater than or equal to 57 wt%. In embodiments, the amount of the polyolefin component in the polymer matrix may be, based on a total weight of the polymer matrix, less than or equal to 79.5 wt%, less than or equal to 75 wt%, less than or equal to 70 wt%, or even less than or equal to 65 wt%. In embodiments, the amount of the polyolefin component in the polymer matrix may be, based on a total weight of the polymer matrix, from 50 wt% to 79.5 wt%, from 50 wt% to 75 wt%, from 50 wt% to 70 wt%, from 50 wt% to 65 wt%, from 53 wt% to 79.5 wt%, from 53 wt% to 75 wt%, from 53 wt% to 70 wt%, from 53 wt% to 65 wt%, from 55 wt% to 79.5 wt%, from 55 wt% to 75 wt%, from 55 wt% to 70 wt%, from 55 wt% to 65 wt%, from 57 wt% to 79.5 wt%, from 57 wt% to 75 wt%, from 57 wt% to 70 wt%, or even from 57 wt% to 65 wt%, or any and all sub-ranges formed from any of these endpoints.

In embodiments, the polyolefin component may comprise polyethylene, polypropylene, or a combination thereof.

In embodiments, the polyolefin component may comprise at least one polyethylene polymer. In embodiments, the at least one polyethylene polymer may comprise a polyethylene homopolymer (i.e., composed of ethylene monomers) or a polyethylene copolymer having greater than 50 wt% ethylene monomer, based on a total of monomeric units in the polyethylene copolymer and an additional comonomer, such as C₃-C₁₂ alpha olefins.

In embodiments, the at least one polyethylene polymer may comprise a melt flow rate (190 °C/2.16 kg) from 40 g/10 min to 100 g/10 min. In embodiments, the at least one polyethylene polymer may comprise a melt flow rate (190 °C/2.16 kg) greater than or equal to 40 g/10 min to 100 g/10 min or even greater than or equal to 60 g/10 min to 100 g/10 min. In embodiments, the at least one polyethylene polymer may comprise a melt flow rate (190 °C/2.16 kg) less than or equal to 100 g/10 min or even less than or equal to 80 g/10 min. In embodiments, the at least one polyethylene polymer may comprise a melt flow rate (190 °C/2.16 kg) from 40 g/10 min to 100 g/10 min, from 40 g/10 min to 80 g/10 min, from 60 g/10 min to 100 g/10 min, or even from 60 g/10 min to 80 g/10 min, or any and all sub-ranges formed from any of these endpoint.

In embodiments, the at least one polyethylene polymer may comprise a zero shear viscosity (190 °C) from 125 Pa·s to 200 Pa·s. In embodiments, the at least one polyethylene polymer may comprise a zero shear viscosity (190 °C) greater than or equal to 125 Pa·s or even greater than or equal to 150 Pa·s. In embodiments, the at least one polyethylene polymer may comprise a zero shear viscosity (190 °C) less than or equal to 200 Pa·s or even less than or equal to 180 Pa·s. In embodiments, the at least one polyethylene polymer may comprise a zero shear viscosity (190 °C) from 125 Pa·s to 200 Pa·s, from 125 Pa·s to 180 Pa·s, from 150 Pa·s to 200 Pa·s, or even from 150 Pa·s to 180 Pa·s, or any and all sub-ranges formed from any of these endpoints.

In embodiments, the polyolefin component may comprise at least one polypropylene polymer. In embodiments, the at least one polypropylene polymer may be selected from the group consisting of a polypropylene homopolymer (i.e., composed of propylene monomers), polypropylene impact copolymer, and polypropylene random copolymer. In embodiments, the at least one polypropylene polymer may comprise a polypropylene copolymer that includes greater than or equal to 85% propylene monomeric units, based on a total of monomeric units in the polypropylene copolymer.

In embodiments, the at least one polypropylene polymer may comprise a melt flow rate (230 °C/2.16 kg) from 40 g/10 min to 100 g/10 min. In embodiments, the at least one polypropylene polymer may comprise a melt flow rate (230 °C/2.16 kg) greater than or equal to 40 g/10 min to 100 g/10 min or even greater than or equal to 60 g/10 min to 100 g/10 min. In embodiments, the at least one polypropylene polymer may comprise a melt flow rate (230 °C/2.16 kg) less than or equal to 100 g/10 min or even less than or equal to 80 g/10 min. In embodiments, the at least one polypropylene polymer may comprise a melt flow rate (230 °C/2.16 kg) from 40 g/10 min to 100 g/10 min, from 40 g/10 min to 80 g/10 min, from 60 g/10 min to 100 g/10 min, or even from 60 g/10 min to 80 g/10 min, or any and all sub-ranges formed from any of these endpoint.

In embodiments, the at least one polypropylene polymer may comprise a zero shear viscosity (230 °C) from 125 Pa·s to 200 Pa·s. In embodiments, the at least one polypropylene polymer may comprise a zero shear viscosity (230 °C) greater than or equal to 125 Pa·s or even greater than or equal to 150 Pa·s. In embodiments, the at least one polypropylene polymer may comprise a zero shear viscosity (230 °C) less than or equal to 200 Pa·s or even less than or equal to 180 Pa·s. In embodiments, the at least one polypropylene polymer may comprise a zero shear viscosity (230 °C) from 125 Pa·s to 200 Pa·s, from 125 Pa·s to 180 Pa·s, from 150 Pa·s to 200 Pa·s, or even from 150 Pa·s to 180 Pa·s, or any and all sub-ranges formed from any of these endpoints.

Suitable commercial embodiments on the polyolefin component are available from Braskem, such as polypropylene grade C758-80NA; or from Dow, such as high density polyethylene grade DMDA-8940 NT 7.

### Maleic Anhydride-functional Compatibilizer

The maleic anhydride-functional compatibilizer included in the polymer matrix helps compatibilize the continuous glass fibers and the polyolefin component to ensure the maintained mechanical properties are achieved.

In embodiments, the polymer matrix may comprise, based on a total weight of the polymer matrix, 0.5 wt% to 5 wt% of the maleic anhydride-functional compatibilizer. In embodiments, the polymer matrix may comprise, based on a total weight of the polymer matrix, 1 wt% to 3.5 wt% of the maleic anhydride-functional compatibilizer. In embodiments, the polymer matrix may comprise, based on a total weight of the polymer matrix, 2 wt% to 3 wt% of the maleic anhydride-functional compatibilizer. In embodiments, the amount of maleic anhydride-functional compatibilizer in the polymer matrix may be, based on a total weight of the polymer matrix, greater than 0.5 wt%, greater than 1 wt%, greater than or equal to 1.5 wt%, or even greater than or equal to 2 wt%. In embodiments, the amount of maleic anhydride-functional compatibilizer in the polymer matrix may be, based on a total weight of the polymer matrix, less than or equal to 5 wt%, less than or equal to 4.5 wt%, less than or equal to 4 wt%, less than or equal to 3.5 wt%, or even less than or equal to 3 wt%. In embodiments, the amount of maleic anhydride-functional compatibilizer in the polymer matrix may be, based on a total weight of the polymer matrix from 0.5 wt% to 5 wt%, from 0.5 wt% to 4.5 wt%, from 0.5 wt% to 4 wt%, from 0.5 wt% to 3.5 wt%, from 0.5 wt% to 3 wt%, from 1 wt% to 5 wt%, from 1 wt% to 4.5 wt%, from 1 wt% to 4 wt%, from 1 wt% to 3.5 wt%, from 1 wt% to 3 wt%, from 1.5 wt% to 5 wt%, from 1.5 wt% to 4.5 wt%, from 1.5 wt% to 4 wt%, from 1.5 wt% to 3.5 wt%, from 1.5 wt% to 3 wt%, from 2 wt% to 5 wt%, from 2 wt% to 4.5 wt%, from 2 wt% to 4 wt%, from 2 wt% to 3.5 wt%, or even from 2 wt% to 3 wt%, or any and all sub-ranges formed from any of these endpoints.

In embodiments, the maleic anhydride-functional compatibilizer may comprise maleic anhydride grafted polypropylene, maleic anhydride grafted polyethylene, or a combination thereof.

In embodiments, the maleic anhydride-functional compatibilizer may include 0.5 wt% to 1.5 wt% maleic anhydride functional group, based on a total weight of the maleic anhydride-functional compatibilizer. In embodiments, the amount of maleic anhydride functional group in the maleic anhydride-functional compatibilizer may be, based on a total weight of the maleic anhydride-functional compatibilizer, greater than or equal to 0.5 wt% or even greater than or equal to 1 wt%. In embodiments, the amount of maleic anhydride functional group in the maleic anhydride-functional compatibilizer may be, based on a total weight of the maleic anhydride-functional compatibilizer, less than or equal to 1.5 wt% or even less than or equal to 1.25 wt%. In embodiments, the amount of maleic anhydride functional group in the maleic anhydride-functional compatibilizer may be, from 0.5 wt% to 1.5 wt%, from 0.5 wt% to 1.25 wt%, from 1 wt% to 1.5 wt%, or even from 1 wt% to 1.25 wt%, or any and all sub-ranges formed from any of these endpoints.

Suitable commercial embodiments of the maleic anhydride-functional compatibilizer are available under the brand PA-BOND, such as grade 700 and grade 323, available from Polymer Asia.

### Plurality of Continuous Glass Fibers

The plurality of continuous glass fibers is included in the continuous glass fiber reinforced thermoplastic material described herein to ensure the maintained mechanical properties are achieved (e.g., tensile and flexural modulus and strength).

In embodiments, the continuous glass fiber reinforced thermoplastic material may comprise, based on a total weight of the continuous glass fiber reinforced thermoplastic material 50 wt% to 80 wt% of the plurality of continuous glass fibers. In embodiments, the amount of the plurality of continuous glass fibers in the continuous glass fiber reinforced thermoplastic material may be, based on a total weight of the continuous glass fiber reinforced thermoplastic material, greater than or equal to 50 wt%, greater than or equal to 55 wt%, greater than or equal to 60 wt, or even greater than or equal to 65 wt%. In embodiments, the amount of the plurality of continuous glass fibers in the continuous glass fiber reinforced thermoplastic material may be, based on a total weight of the continuous glass fiber reinforced thermoplastic material, less than or equal to 80 wt% or even less than or equal to 75 wt%. In embodiments, the amount of the plurality of continuous glass fibers in the continuous glass fiber reinforced thermoplastic material may be, based on a total weight of the continuous glass fiber reinforced thermoplastic material, from 50 wt% to 80 wt%, from 50 wt% to 75 wt%, from 55 wt% to 80 wt%, from 55 wt% to 75 wt%, from 60 wt% to 80 wt%, from 60 wt% to 75 wt%, from 65 wt% to 80 wt%, or even from 65 wt% to 75 wt%, or any and all sub-ranges formed from any of these endpoints.

In embodiments, the plurality of continuous glass fibers span all or substantially all of a dimension of the continuous glass fiber reinforced thermoplastic material. For example, in embodiments, the plurality of continuous fibers may span all or substantially all of the length of the continuous glass fiber reinforced thermoplastic material. In embodiments, each of the continuous fibers in the plurality of continuous fibers may have a length and the lengths of the continuous fibers in the plurality of continuous fibers may be substantially parallel. For example, in embodiments, the lengths of the continuous fibers may extend along and parallel to the length of the continuous glass fiber reinforced thermoplastic material.

In embodiments, the plurality of continuous fibers may have an average diameter of 12 µm to 24 µm. In embodiments, the plurality of continuous fibers may have an average diameter greater than or equal to 12 µm, greater than or equal to 14 µm, or even greater than or equal to 16 µm. In embodiments, the plurality of continuous fibers may have an average diameter less than or equal to 24 µm or even less than or equal to 20 µm. In embodiments, the plurality of continuous fibers may have an average diameter from 12 µm to 24 µm, from 12 µm to 20 µm, from 14 µm to 24 µm, from 14 µm to 20 µm, from 16 µm to 24 µm, or even from 16 µm to 20 µm, or any and all sub-ranges formed from any of these endpoints.

In embodiments, the plurality of continuous fibers may have an average linear mass density from 2200 TEX to 600 TEX. In embodiments, the plurality of continuous fibers may have an average linear mass density less than or equal to 2200 TEX, less than or equal to 2000 TEX, or even less than or equal to 1600 TEX. In embodiments, the plurality of continuous fibers may have an average linear mass density greater than or equal to 600 TEX, greater than or equal to 800 TEX, or even greater than or equal to 1000 TEX. In embodiments, the plurality of continuous fiber may have an average linear mass density from 2200 TEX to 600 TEX, from 2200 TEX to 800 TEX, from 2200 TEX to 600 TEX, from 2000 TEX to 600 TEX, from 2000 TEX to 800 TEX, from 2000 TEX to 600 TEX, from 1600 TEX to 600 TEX, from 1600 TEX to 800 TEX, or even from 1600 TEX to 600 TEX, or any and all sub-ranges formed from any of these endpoints.

In embodiments, the arrangement of the continuous glass fibers may be adjusted to achieve a desired continuous glass fiber weight percentage or tape areal weight. In embodiments, the plurality of continuous fibers may form parallel, single end rovings embedded in the polymer maxtrix. The parallel, single end rovings may be continuous in a length direction of the continuous glass fiber reinforced thermoplastic material. The continuous glass fiber reinforced thermoplastic material may include an average of 1 to 3 rovings per cm, when measured in the width direction.

In embodiments, each of the continuous fibers in the plurality of continuous glass fibers may comprise a sizing composition to allow for compatibilization between the continuous fibers and the polyolefin component. In embodiments, the sizing composition may comprise at least one of a film former, a lubricant, and a coupling agent.

Suitable commercial embodiments of the plurality of continuous fibers are available under the TUFROV brand, such as long glass fiber grade 4588, available from NEG; or under the TYPE 30 brand, such as single-end grade SE4849, available from Owens Corning.

### Continuous Glass Fiber Reinforced Thermoplastic Material

As described herein, the continuous glass fiber reinforced thermoplastic materials include a polymer matrix comprising a polyvinyl butyral component, a polyolefin component, and a maleic anhydride-functional compatibilizer, which have maintained mechanical properties (i.e., tensile and flexural modulus and strength) and improved adhesion and allow for enhanced sustainability.

In embodiments, the continuous glass fiber reinforced thermoplastic material may have a tensile strength that is within 20%, within 15%, within 10%, or even within 5%, of a tensile strength at break of a similar continuous glass fiber reinforced thermoplastic material that is identical except that it does not include the polyvinyl butyral component, as measured according to ASTM D638-14 at 23 °C and a rate of strain of 0.2 in/min.

In embodiments, the continuous glass fiber reinforced thermoplastic material may have a tensile strength greater than or equal to 300 MPa or even greater than or equal to 400 MPa. In embodiments, the continuous glass fiber reinforced thermoplastic material may have a tensile strength less than or equal to 650 MPa or even less than or equal to 550 MPa. In embodiments, the continuous glass fiber reinforced thermoplastic material may have a tensile strength from 300 MPa to 650 MPa, from 300 MPa to 550 MPa, from 400 MPa to 650 MPa, from 400 MPa to 550 MPa, or any and all sub-ranges formed from any of these endpoints.

In embodiments, the continuous glass fiber reinforced thermoplastic material may have a tensile modulus that is within 20%, within 15%, within 10%, or even within 5%, of a tensile modulus of a similar continuous glass fiber reinforced thermoplastic material that is identical except that it does not include the polyvinyl butyral component, as measured according to ASTM D638-14 at 23 °C and a rate of strain of 0.2 in/min.

In embodiments, the continuous glass fiber reinforced thermoplastic material may have a tensile modulus greater than or equal to 13000 MPa, greater than or equal to 15000 MPa, or even greater than or equal to 17000 MPa. In embodiments, the continuous glass fiber reinforced thermoplastic material may have a tensile modulus less than or equal to 27000 MPa, less than or equal to 25000 MPa, or even less than or equal to 23000 MPa. In embodiments, the continuous glass fiber reinforced thermoplastic material may have a tensile modulus from 13000 MPa to 27000 MPa, from 13000 MPa to 25000 MPa, from 13000 MPa to 23000 MPa, from 15000 MPa to 27000 MPa, from 15000 MPa to 25000 MPa, from 15000 MPa to 23000 MPa, from 17000 MPa to 27000 MPa, from 17000 MPa to 25000 MPa, or even from 17000 MPa to 23000 MPa, or any and all sub-ranges formed from any of these endpoints.

In embodiments, the continuous glass fiber reinforced thermoplastic material may have a flexural strength that is within 40%, within 35%, within 30%, within 25%, within 20%, or even within 15%, of a flexural strength a similar continuous glass fiber reinforced thermoplastic material that is identical except that it does not include the polyvinyl butyral component, as measured according to ASTM D790-17 at 23 °C and a rate of strain 0.05 in/min.

In embodiments, the continuous glass fiber reinforced thermoplastic material may have a flexural strength greater than or equal to 200 MPa or even greater than or equal to 250 MPa. In embodiments, the continuous glass fiber reinforced thermoplastic material may have a flexural strength less than or equal to 500 MPa or even less than or equal to 400 MPa. In embodiments, the continuous glass fiber reinforced thermoplastic material may have a flexural strength from 200 MPa to 500 MPa, from 200 MPa to 400 MPa, from 250 MPa to 500 MPa, or even from 250 MPa to 400 MPa, or any and all sub-ranges formed from any of these endpoints.

In embodiments, the continuous glass fiber reinforced thermoplastic material may have a flexural modulus that is within 20%, within 15%, or even within 10% of a flexural modulus of a similar continuous glass fiber reinforced thermoplastic material that is identical except that it does not include the polyvinyl butyral component, as measured according to ASTM D790-17 at 23 °C and a rate of strain 0.05 in/min.

In embodiments, the continuous glass fiber reinforced thermoplastic material may have a flexural modulus greater than or equal to 15000 MPa or even greater than or equal to 17000 MPa. In embodiments, the continuous glass fiber reinforced thermoplastic material may have a flexural modulus less than or equal to 27000 MPa or even less than or equal to 25000 MPa. In embodiments, the continuous glass fiber reinforced thermoplastic material may have a flexural modulus from 15000 MPa to 27000 MPa, from 15000 MPa to 25000 MPa, from 17000 MPa to 27000 MPa, from 17000 MPa to 25000 MPa, or any and all sub-ranges formed from any of these endpoints.

### Additives

In embodiments, the continuous glass fiber reinforced thermoplastic material may further comprise an additive. The additive can be used in any amount that is sufficient to obtain a desired processing or performance property for the continuous glass fiber reinforced thermoplastic material. The amount should not be wasteful of the additive nor detrimental to the processing or performance of the continuous glass fiber reinforced thermoplastic material.

In embodiments, the additive may comprise anti-blocking agents; stabilizers; adhesion promoters; anti-fogging agents; anti-static agents; biocides (antibacterials, fungicides, and mildewcides); colorants including pigments and dyes; dispersants; fillers and extenders; fire and flame retardants and smoke suppressants; hardness adjusters; impact modifiers; initiators; lubricants; mold release agents; processing aids; silanes, titanates and zirconates; stearates; ultraviolet light absorbers; viscosity regulators; or combinations thereof.

### Processing

In embodiments, the components of the polymer matrix may be added all together in an extruder and mixed. In embodiments, mixing may be a continuous process at an elevated temperature (e.g., 120 °C - 250 °C) with a mixing speed of from 200 revolution per minute (rpm) to 700 rpm that is sufficient to melt the polymer matrix. In embodiments, the output from the extruder is pelletized for later extrusion, molding, thermoforming, foaming, calendaring, and/or other processing into articles.

Single end roving bundles may be loaded onto a payoff creel, where they are strung through a guiding system to arrange them in parallel to each other. Fibers are pulled through a handling system including spreading, pre-heating, and a melt impregnation die geometry, where they are combined with the polymer matrix extruded from a single or twin screw extruder arranged perpendicular to the fiber direction (crosshead). The fiber and polymer combination is continued to be pulled through a cooling system of either chilled rollers or blown air to solidify the polymer and fix the tape's dimensions. The tape is then wound onto a reel as a finished product.

### Applications

As described herein, the continuous glass fiber reinforced thermoplastic material may be useful for any type of product for which properties such as maintained mechanical properties (i.e., tensile and flexural modulus and strength), improved adhesion, and enhanced sustainability are desirable or required.

For example, in embodiments, the continuous glass fiber reinforced thermoplastic material may be a unidirectional tape. As described herein, the polyvinyl butyral component imparts improved adhesion to the continuous glass fiber reinforced thermoplastic material. In embodiments, the continuous glass fiber reinforced thermoplastic material may have an areal weight of 200 g/m² to 600 g/m². In embodiments, the continuous glass fiber reinforced thermoplastic material may have an areal weight greater than or equal to 200 g/m², greater than or equal to 250 g/m², greater than or equal to 300 g/m², greater than or equal to 350 g/m², greater than or equal to 400 g/m², or even greater than or equal to 450 g/m². In embodiments, the continuous glass fiber reinforced thermoplastic material may have an areal weight less than or equal to 600 g/m², less than or equal to 550 g/m², less than or equal to 500 g/m², less than or equal to 450 g/m², or even less than or equal to 400 g/m². In embodiments, the continuous glass fiber reinforced thermoplastic material may have an areal weight from 200 g/m² to 600 g/m², from 200 g/m² to 550 g/m², from 200 g/m² to 500 g/m², from 200 g/m² to 450 g/m², from 200 g/m² to 400 g/m², from 250 g/m² to 600 g/m², from 250 g/m² to 550 g/m², from 250 g/m² to 500 g/m², from 250 g/m² to 450 g/m², from 250 g/m² to 400 g/m², from 300 g/m² to 600 g/m², from 300 g/m² to 550 g/m², from 300 g/m² to 500 g/m², from 300 g/m² to 450 g/m², from 300 g/m² to 400 g/m², from 350 g/m² to 600 g/m², from 350 g/m² to 550 g/m², from 350 g/m² to 500 g/m², from 350 g/m² to 450 g/m², from 350 g/m² to 400 g/m², from 400 g/m² to 600 g/m², from 400 g/m² to 550 g/m², from 400 g/m² to 500 g/m², from 400 g/m² to 450 g/m², from 450 g/m² to 600 g/m², from 450 g/m² to 550 g/m², or even from 450 g/m² to 500 g/m², or any and all sub-ranges formed from any of these endpoints

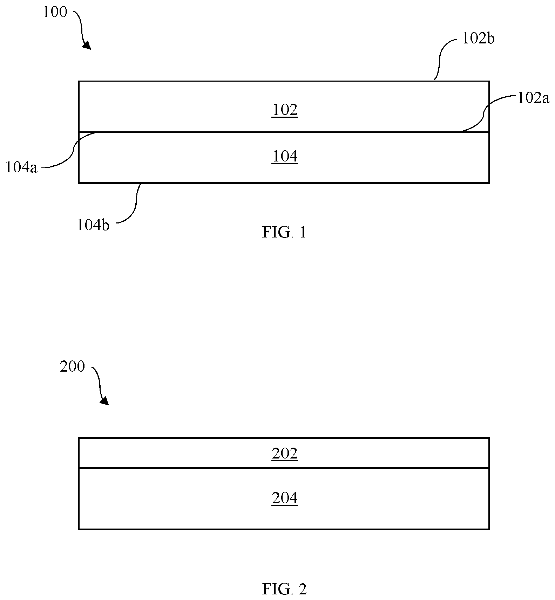

In embodiments, the continuous glass fiber reinforced thermoplastic material may be a layer in a laminate. For example, referring now to FIG. 1, a laminate is shown at 100. The laminate 100 includes a first layer 102 and a second layer 104. Each of the first layer 102 and the second layer 104 have a first surface 102a, 104a, and an opposing second surface 102b, 104b. The first surface 102a of the first layer 102 may be bonded to the first surface 104a of the second layer 104. The laminate 100 may be formed either by compression molding above the polymer's melt temperature in a parallel platen press, or fed through a continuous belt laminator machine, which heats the layers and processes the finished laminate out of the end of the laminator. At least one of the first and second layers 102, 104 may be defined by the continuous glass fiber reinforced thermoplastic material described herein. For example, in embodiments, each of the first and second layers 102a, 102b are defined by the continuous glass fiber reinforced thermoplastic material of any of the preceding claims. In other embodiments, one of the first and second layers 102, 104 or any additional layers may comprise foamed polymer boards, honeycomb polymer structures, metal foils, or a combination thereof.

Referring now to FIG. 2, an over molded article is shown at 200. The over molded article 200 includes a polymeric composition 202 bonded to a substrate 204. The substrate 204 may comprise the continuous glass fiber reinforced thermoplastic material described herein. In embodiments, the polymeric composition 202 may be a polymer without fillers or may be a chopped glass filled polymer.

In embodiments, a process for preparing the over molded article 200 may comprise contacting the polymeric composition 202 to the substrate 204 and heating to bond the polymeric composition 202 to the substrate 204. The over molding process may include open injection molding, direct long fiber composite (DLFT) compression molding, or glass matter thermoplastic (GMT) compression molding. In embodiment, the over molded article 200 may comprise a generally rectangular cross-section. A person having ordinary skill in the art would appreciate that other geometries may be manufactured.

The continuous glass fiber reinforced thermoplastic materials have potential for use in applications in many different industries, including but not limited to: automotive and transportation; consumer products; electronics; healthcare and medical; household appliances; packaging; and other industries or applications benefiting from the unique combination of properties. For example, tape embodiments may be used in automotive reinforcement applications and oil and gas pipeline reinforcement applications. Laminate and over molded article embodiments may be used in composite decking, garage door paneling, and outdoor sports components.

### EXAMPLES

Table 1 shows sources of ingredients for the continuous glass fiber reinforced thermoplastic material of Examples E1-E3 and Comparative Examples C1 and C2.

**Table 1**

| **Ingredient** | **Brand** | **Source** |
|---|---|---|
| recycled PVB *(polyvinyl butyral component)* | SHARK PELLETS C2c | Shark Solutions |
| polypropylene *(polyolefin component)* | C758-80NA | Braskem |
| polyethylene *(polyolefin component)* | DMDA-8940 NT 7 | Dow |
| polypropylene-g-MAH (1 wt% functional group content) *(maleic anhydride-functional compatibilizer)* | PA-BOND 700 | Polymer Asia |
| polyethylene-g-MAH (1 wt% functional group content) *(maleic anhydride-functional compatibilizer)* | PA-BOND 323 | Polymer Asia |
| glass fiber *(plurality of continuous glass fibers)* | SE4849 TYPE 30 | Owens Corning |

Tables 2 and 3 show the formulations of continuous glass fiber reinforced thermoplastic material Examples E1-E3 and Comparative Examples C1 and C2. "wt% (P)" refers to wt%, based on a total weight of the polymer matrix." "wt% (T)" refers to wt%, based on a total weight of the continuous glass fiber reinforced thermoplastic material.

**Table 2**

| *Examples* | **C1** | | **E1** | |
|---|---|---|---|---|
| | wt% (P) | wt% (T) | wt% (P) | wt% (T) |
| *SHARK PELLETS C2c* | - | - | 40.0 | 16.0 |
| *C758-80NA* | 97.5 | 39.0 | 57.5 | 23.0 |
| *PA-BOND 700* | 2.5 | 1.0 | 2.5 | 1.0 |
| *SE4849 TYPE 30* | - | 60.0 | - | 60.0 |

**Table 3**

| *Examples* | **C2** | | **E2** | | **E3** | |
|---|---|---|---|---|---|---|
| | wt% (P) | wt% (T) | wt% (P) | wt% (T) | wt% (P) | wt% (T) |
| *SHARK PELLETS C2c* | - | - | 20.0 | 8.0 | 40.0 | 16.0 |
| *DMDA-8940 NT 7* | 97.5 | 39.0 | 77.5 | 31.0 | 57.5 | 23.0 |
| *PA-BOND 323* | 2.5 | 1.0 | 2.5 | 1.0 | 2.5 | 1.0 |
| *SE4849 TYPE 30* | - | 60.0 | - | 60.0 | - | 60.0 |

Tables 4 and 5 show Example Tapes ET1-ET6 and Comparative Example Tapes CT1-CT4 formed from the continuous glass fiber reinforced thermoplastic materials examples and comparative examples and certain properties thereof.

The tape examples and comparative tape examples were formed through a crosshead melt-fiber impregnation through process in accordance with embodiments described herein. In particular, single end roving bundles were loaded onto a payoff creel, where they were strung through a guiding system to arrange them in parallel to each other. Fibers were pulled through a handling system including spreading, pre-heating, and a melt impregnation die geometry, where they were combined with polymer extruder from a twin screw extruder arranged perpendicular to the fiber direction (crosshead). The fiber and polymer combination was continued to be pulled through a cooling system of either chilled rollers or blown air to solidify the polymer and fix the tape's dimensions. The tape was then wound onto a reel as a finished product.

**Table 4**

| *Examples* | **CT1** | **ET1** | **CT2** | **ET2** |
|---|---|---|---|---|
| *Thermoplastic Material* | C1 | E1 | C1 | E1 |
| *Areal weight (g*/*m²)* | 520 | 520 | 376 | 376 |
| *Tensile strength at break (MPa)* | 463 | 512 | 310 | 323 |
| *Tensile modulus (MPa)* | 21236 | 24614 | 13996 | 14962 |
| *Flexural strength (MPa)* | 572 | 392 | 410 | 353 |
| *Flexural modulus (MPa)* | 29532 | 25405 | 22039 | 21642 |

**Table 5**

| *Examples* | **CT3** | **ET3** | **ET4** | **CT4** | **ET5** | **ET6** |
|---|---|---|---|---|---|---|
| *Thermoplastic Material* | C2 | E2 | E3 | C2 | E2 | E3 |
| *Areal weight (g*/*m²)* | 520 | 520 | 520 | 376 | 376 | 376 |
| *Tensile strength at break (MPa)* | 515 | 510 | 494 | 476 | 475 | 434 |
| *Tensile modulus (MPa)* | 21856 | 23097 | 21787 | 19787 | 20408 | 19927 |
| *Flexural strength (MPa)* | 333 | 296 | 225 | 325 | 346 | 306 |
| *Flexural modulus (MPa)* | 19969 | 19479 | 18132 | 20312 | 21459 | 24114 |

As shown in Table 4, Example Tapes ET1 and ET2, continuous glass fiber reinforced thermoplastic materials including SHARK PELLETS C2c (polyvinyl butyral component), C758-80NA (polyolefin component), and PA-BOND 700 (maleic anhydride-functional compatibilizer), had a tensile strength within 10.6% and 4.2%, respectively; a tensile modulus within 15.9% and 6.9%, respectively; a flexural strength within 31.5% and 13.9%, respectively; and a flexural modulus within 14.0% and 1.8%, respectively, of Comparative Example Tapes CT1 and CT2, respectively, continuous glass fiber reinforced thermoplastic materials including C758-80NA and PA-BOND 700 and lacking a polyvinyl butyral component.

As shown in Table 5, Example Tapes ET3 and ET4, continuous glass fiber reinforced thermoplastic materials including SHARK PELLETS C2c (polyvinyl butyral component), DMDA-8940 NT 7 (polyolefin component), and PA-BOND 323 (maleic anhydride-functional compatibilizer), had a tensile strength within 1.0% and 4.1%, respectively; a tensile modulus within 5.7% and 0.3%, respectively; a flexural strength within 11.1% and 32.4%, respectively; and a flexural modulus within 2.5% and 9.2%, respectively, of Comparative Example Tape CT3, continuous glass fiber reinforced thermoplastic material including DMDA-8940 NT 7 and PA-BOND 323 and lacking a polyvinyl butyral component.

As also shown in Table 5, Example Tapes ET5 and ET6, continuous glass fiber reinforced thermoplastic materials including SHARK PELLETS C2c (polyvinyl butyral component), DMDA-8940 NT 7 (polyolefin component), and PA-BOND 323 (maleic anhydride-functional compatibilizer), had a tensile strength within 0.2% and 8.8%, respectively; a tensile modulus within 3.1% and 0.7%, respectively; a flexural strength within 6.5% and 5.8%, respectively; and a flexural modulus within 5.6% and 18.7%, respectively, of Comparative Example Tape CT4, continuous glass fiber reinforced thermoplastic material including DMDA-8940 NT 7 and PA-BOND 323 and lacking a polyvinyl butyral component.

As exemplified by Example Tapes ET1-ET6 and Comparative Examples Tapes CT1-CT4, continuous glass fiber reinforced thermoplastic material including a polyvinyl butyral component as described herein have maintained mechanical properties as compared to a similar continuous glass fiber reinforced material that is identical except that it does not include the polyvinyl butyral component.

## Claims

1. A continuous glass fiber reinforced thermoplastic material, comprising:
a polymer matrix comprising, based on a total weight of the polymer matrix:
20 wt% to 40 wt% of a polyvinyl butyral component;
50 wt% to 79.5 wt% of a polyolefin component, the polyolefin component comprising polyethylene, polypropylene, or a combination thereof,
0.5 wt% to 5 wt% of a maleic anhydride-functional compatibilizer; and
50 wt% to 80 wt% of a plurality of continuous glass fibers, based on a total weight of the continuous glass fiber reinforced thermoplastic material.

2. The continuous glass fiber reinforced thermoplastic material of claim 1, wherein the continuous glass fiber reinforced thermoplastic material comprises 20 wt% to 50 wt% of the polymer matrix, based on a total weight of the continuous glass fiber reinforced thermoplastic material.

3. The continuous glass fiber reinforced thermoplastic material of any of the preceding claims, wherein the plurality of continuous glass fibers spans all or substantially all, that is greater than 75%, of a dimension of the continuous glass fiber reinforced thermoplastic material,
and/or wherein each of the continuous glass fibers in the plurality of continuous glass fibers have a length, the lengths of the continuous glass fibers in the plurality of continuous fibers being substantially parallel,
and/or wherein each of the continuous glass fibers in the plurality of continuous glass fibers comprise a sizing composition, the sizing composition comprising at least one of a film former, lubricant, and a coupling agent,
and/or wherein the plurality of continuous fibers have an average diameter of 12 µm to 24 µm, and/or wherein the plurality of continuous fibers have an average linear mass density from 2200 TEX to 600 TEX,
and/or wherein the plurality of continuous fibers form parallel, single end rovings embedded in the polymer matrix, the parallel, single end rovings being continuous in a length direction of the continuous glass fiber reinforced thermoplastic material, the continuous glass fiber reinforced thermoplastic material including an average of 1 to 3 rovings per cm, when measured width direction.

4. The continuous glass fiber reinforced thermoplastic material of any of the preceding claims, wherein the polymer matrix comprises 1 wt% to 3.5% maleic anhydride-functional, based on a total weight of the polymer matrix, preferably wherein the polymer matrix comprises 2 wt% to 3% of the maleic anhydride-functional compatibilizer, based on a total weight of the polymer matrix.

5. The continuous glass fiber reinforced thermoplastic material of any of the preceding claims, wherein the maleic anhydride-functional compatibilizer comprises 0.5 wt% to 1.5 wt% maleic anhydride functional group, based on a total weight of the maleic anhydride-functional compatibilizer,
and/or wherein the maleic anhydride-functional compatibilizer comprises maleic anhydride grafted polypropylene, maleic anhydride grafted polyethylene, or a combination thereof.

6. The continuous glass fiber reinforced thermoplastic material of any of the preceding claims, wherein the polymer matrix comprises 22 wt% to 35 wt% of the polyvinyl butyral, based on a total weight of the polymer matrix, preferably wherein the polymer matrix comprises 24 wt% to 28 wt% of the polyvinyl butyral component, based on a total weight of the polymer matrix.

7. The continuous glass fiber reinforced thermoplastic material of any of the preceding claims, wherein the polyvinyl butyral component comprises virgin polyvinyl butyral, recycled polyvinyl butyral, or a combination thereof.

8. The continuous glass fiber reinforced thermoplastic material of any of the preceding claims, wherein the polyvinyl butyral component comprises a plasticizer, and/or wherein the polyvinyl butyral component comprises a plasticizer in the range of 0 wt% to 30 wt%, based on a total weight of the polyvinyl butyral component., preferably wherein the polyvinyl butyral component comprises a plasticizer in the range of 10 wt% to 30 wt%, based on a total weight of the polyvinyl butyral component.

9. The continuous glass fiber reinforced thermoplastic material of claim 8, wherein the polyvinyl butyral component comprises a plasticizer comprising triethyleneglycol bis (2-ethylhexanoate), tetraethylene glycol di-n-heptanoate, dibutyl sebacate, dihexyl adipate, dioctyl adipate, hexyl cyclohexyl adipate, or a combination thereof.

10. The continuous glass fiber reinforced thermoplastic material of any of the preceding claims, wherein the polyolefin component comprises at least one polyethylene polymer,
and/or wherein the polyolefin component comprises at least one polypropylene polymer, preferably wherein the at least one polypropylene polymer is selected from the group consisting of polypropylene homopolymer, polypropylene impact copolymer, and polypropylene random copolymer or wherein the at least one polypropylene polymer comprises a polypropylene copolymer that includes at least 85% propylene monomeric units, based on a total of monomeric units in the polypropylene copolymer.

11. The continuous glass fiber reinforced thermoplastic material of any of the preceding claims, wherein the polymer matrix comprises less than or equal to 2.5 wt% mineral fillers, based on a total weight of the polymer matrix,
and/or wherein the continuous glass fiber reinforced thermoplastic material is a unidirectional tape and/or wherein the continuous glass fiber reinforced thermoplastic material has an areal weight of 200 g/m² to 600 g/m²,
and/or wherein the continuous glass fiber reinforced thermoplastic material has a tensile strength that is within 20% of a tensile strength at break of a similar continuous glass fiber reinforced thermoplastic material that is identical except that it does not include the polyvinyl butyral component, as measured according to ASTM D638-14 at 23 °C and a rate of strain of 0.2 in/min and/or wherein the continuous glass fiber reinforced thermoplastic material has a tensile modulus that is within 20% of a tensile modulus of a similar continuous glass fiber reinforced thermoplastic material that is identical except that it does not include the polyvinyl butyral component, as measured according to ASTM D638-14 at 23 °C and a rate of strain of 0.2 in/min,
and/or wherein the continuous glass fiber reinforced thermoplastic material has a flexural strength that is within 40% of a flexural strength a similar continuous glass fiber reinforced thermoplastic material that is identical except that it does not include the polyvinyl butyral component, as measured according to ASTM D790-17 at 23 °C and a rate of strain 0.05 in/min.

12. The continuous glass fiber reinforced thermoplastic material of any of the preceding claims, wherein the continuous glass fiber reinforced thermoplastic material has a flexural modulus that is within 20% of a flexural modulus of a similar continuous glass fiber reinforced thermoplastic material that is identical except that it does not include the polyvinyl butyral component, as measured according to ASTM D790-17 at 23 °C and a rate of strain 0.05 in/min.

13. The continuous glass fiber reinforced thermoplastic material of any of the preceding claims, wherein the continuous glass fiber reinforced thermoplastic material is a layer in a laminate.

14. A laminate comprising:
a first layer having a first surface and an opposing second surface; and
a second layer having a first surface and an opposing second surface,
wherein the first surface of the first layer is bonded to the first surface of the second layer,
and
wherein each of the first and second layers are defined by the continuous glass fiber reinforced thermoplastic material of any of the preceding claims.

15. An over molded article comprising:
a polymeric composition bonded to a substrate,
wherein the substrate comprises the continuous glass fiber reinforced thermoplastic material of any of the preceding claims.

## Patentansprüche

1. Endlosglasfaser-verstärktes thermoplastisches Material umfassend:
eine Polymermatrix umfassend, bezogen auf ein Gesamtgewicht der Polymermatrix:
20 Gew.-% bis 40 Gew.-% an einer Polyvinylbutyralkomponente;
50 Gew.-% bis 79,5 Gew.-% an einer Polyolefinkomponente, wobei die Polyolefinkomponente Polyethylen, Polypropylen oder eine Kombination davon umfasst,
0,5 Gew.-% bis 5 Gew.-% an einem Maleinsäureanhydrid-funktionellen Verträglichmacher; und
50 Gew.-% bis 80 Gew.-% an einer Mehrzahl von Endlosglasfasern, bezogen auf das Gesamtgewicht des Endlosglasfaser-verstärkten thermoplastischen Materials.

2. Endlosglasfaser-verstärktes thermoplastisches Material nach Anspruch 1, wobei das Endlosglasfaser-verstärkte thermoplastische Material 20 Gew.-% bis 50 Gew.-% an der Polymermatrix umfasst, bezogen auf ein Gesamtgewicht des Endlosglasfaser-verstärkten thermoplastischen Materials.

3. Endlosglasfaser-verstärktes thermoplastisches Material nach einem der vorstehenden Ansprüche, wobei die Mehrzahl von Endlosglasfasern die gesamte oder im Wesentlichen die gesamte, das heißt mehr als 75 %, einer Abmessung des Endlosglasfaser-verstärkten thermoplastischen Materials überspannt,
und/oder wobei jede der Endlosglasfasern in der Mehrzahl von Endlosglasfasern eine Länge aufweist, wobei die Längen der Endlosglasfasern in der Mehrzahl von Endlosfasern im Wesentlichen parallel sind,
und/oder wobei jede der Endlosglasfasern in der Mehrzahl von Endlosglasfasern eine Schlichtezusammensetzung umfasst, wobei die Schlichtezusammensetzung wenigstens eines von einem Filmbildner, Schmiermittel und Kopplungsmittel umfasst,
und/oder wobei die Mehrzahl von Endlosfasern einen mittleren Durchmesser von 12 µm bis 24 µm aufweist,
und/oder wobei die Mehrzahl von Endlosfasern eine mittlere lineare Massendichte von 2200 TEX bis 600 TEX aufweist,
und/oder wobei die Mehrzahl von Endlosfasern parallele, einendige Rovings bildet, die in die Polymermatrix eingebettet sind, wobei die parallelen, einendigen Rovings in einer Längsrichtung des Endlosglasfaser-verstärkten thermoplastischen Materials endlos sind, wobei das Endlosglasfaser-verstärkte thermoplastische Material im Mittel 1 bis 3 Rovings pro cm, wenn in Breitenrichtung gemessen, enthält.

4. Endlosglasfaser-verstärktes thermoplastisches Material nach einem der vorstehenden Ansprüche, wobei die Polymermatrix 1 Gew.-% bis 3,5 % Maleinsäureanhydridfunktionalität, bezogen auf ein Gesamtgewicht der Polymermatrix, umfasst, vorzugsweise wobei die Polymermatrix 2 Gew.-% bis 3 % an dem Maleinsäureanhydrid-funktionellen Verträglichmacher, bezogen auf ein Gesamtgewicht der Polymermatrix, umfasst.

5. Endlosglasfaser-verstärktes thermoplastisches Material nach einem der vorstehenden Ansprüche, wobei der Maleinsäureanhydrid-funktionelle Verträglichmacher 0,5 Gew.-% bis 1,5 Gew.-% an Maleinsäureanhydrid-funktionellen Gruppen, bezogen auf ein Gesamtgewicht des Maleinsäureanhydrid-funktionellen Verträglichmachers, umfasst,
und/oder wobei der Maleinsäureanhydrid-funktionelle Verträglichmacher Maleinsäureanhydrid-gepfropftes Polypropylen, Maleinsäureanhydrid-gepfropftes Polyethylen oder eine Kombination davon umfasst.

6. Endlosglasfaser-verstärktes thermoplastisches Material nach einem der vorstehenden Ansprüche, wobei die Polymermatrix 22 Gew.-% bis 35 Gew.-% an dem Polyvinylbutyral, bezogen auf ein Gesamtgewicht der Polymermatrix, umfasst, wobei die Polymermatrix vorzugsweise 24 Gew.-% bis 28 Gew.-% an der Polyvinylbutyralkomponente, bezogen auf ein Gesamtgewicht der Polymermatrix, umfasst.

7. Endlosglasfaser-verstärktes thermoplastisches Material nach einem der vorstehenden Ansprüche, wobei die Polyvinylbutyralkomponente natives Polyvinylbutyral, recyceltes Polyvinylbutyral oder eine Kombination davon umfasst.

8. Endlosglasfaser-verstärktes thermoplastisches Material nach einem der vorstehenden Ansprüche, wobei die Polyvinylbutyralkomponente einen Weichmacher umfasst und/oder wobei die Polyvinylbutyralkomponente einen Weichmacher in dem Bereich von 0 Gew.-% bis 30 Gew.-%, bezogen auf ein Gesamtgewicht der Polyvinylbutyralkomponente, umfasst, vorzugsweise wobei die Polyvinylbutyralkomponente einen Weichmacher in dem Bereich von 10 Gew.-% bis 30 Gew.-%, bezogen auf ein Gesamtgewicht der Polyvinylbutyralkomponente, umfasst.

9. Endlosglasfaser-verstärktes thermoplastisches Material nach Anspruch 8, wobei die Polyvinylbutyralkomponente einen Weichmacher umfasst, der Triethylenglykol-bis(2-ethylhexanoat), Tetraethylenglykol-di-n-heptanoat, Dibutylsebacat, Dihexyladipat, Dioctyladipat, Hexylcyclohexyladipat oder eine Kombination davon umfasst.

10. Endlosglasfaser-verstärktes thermoplastisches Material nach einem der vorstehenden Ansprüche, wobei die Polyolefinkomponente wenigstens ein Polyethylenpolymer umfasst,
und/oder wobei die Polyolefinkomponente wenigstens ein Polypropylenpolymer umfasst, vorzugsweise wobei das wenigstens eine Polypropylenpolymer ausgewählt ist aus der Gruppe bestehend aus Polypropylen-Homopolymer, Polypropylen-Schlagzähigkeitscopolymer und statistischem Polypropylen-Copolymer, oder wobei das wenigstens eine Polypropylenpolymer ein Polypropylencopolymer umfasst, das wenigstens 85 % Propylenmonomereinheiten, bezogen auf eine Gesamtmenge von Monomereinheiten in dem Polypropylencopolymer, umfasst.

11. Endlosglasfaser-verstärktes thermoplastisches Material nach einem der vorstehenden Ansprüche, wobei die Polymermatrix weniger als oder gleich 2,5 Gew.-% an mineralischen Füllstoffen, bezogen auf ein Gesamtgewicht der Polymermatrix, umfasst,
und/oder wobei das Endlosglasfaser-verstärkte thermoplastische Material ein unidirektionales Band ist, und/oder wobei das Endlosglasfaser-verstärkte thermoplastische Material ein Flächengewicht von 200 g/m² bis 600 g/m² aufweist,
und/oder wobei das Endlosglasfaser-verstärkte thermoplastische Material eine Zugfestigkeit aufweist, die innerhalb von 20 % einer Bruchfestigkeit eines ähnlichen Endlosglasfaser-verstärkten thermoplastischen Materials liegt, das identisch ist, außer dass es die Polyvinylbutyralkomponente nicht enthält, wie gemessen nach ASTM D638-14 bei 23 °C und einer Dehnungsrate von 0,2 in/min,
und/oder wobei das Endlosglasfaser-verstärkte thermoplastische Material einen Zugmodul aufweist, die innerhalb von 20 % eines Zugmoduls eines ähnlichen Endlosglasfaser-verstärkten thermoplastischen Materials liegt, das identisch ist, außer dass es die Polyvinylbutyralkomponente nicht enthält, wie gemessen nach ASTM D638-14 bei 23 °C und einer Dehnungsrate von 0,2 in/min,
und/oder wobei das Endlosglasfaser-verstärkte thermoplastische Material eine Biegefestigkeit aufweist, die innerhalb von 40 % einer Biegefestigkeit eines ähnlichen Endlosglasfaser-verstärkten thermoplastischen Materials liegt, das identisch ist, außer dass es die Polyvinylbutyralkomponente nicht enthält, wie gemessen nach ASTM D790-17 bei 23 °C und einer Dehnungsrate von 0,05 in/min.

12. Endlosglasfaser-verstärktes thermoplastisches Material nach einem der vorstehenden Ansprüche, wobei das Endlosglasfaser-verstärkte thermoplastische Material einen Biegemodul aufweist, der innerhalb von 20 % eines Biegemoduls eines ähnlichen Endlosglasfaser-verstärkten thermoplastischen Materials liegt, das identisch ist, außer dass es die Polyvinylbutyralkomponente nicht enthält, wie gemessen nach ASTM D790-17 bei 23 °C gemessen und einer Dehnungsrate von 0,05 in/min.

13. Endlosglasfaser-verstärktes thermoplastisches Material nach einem der vorstehenden Ansprüche, wobei das Endlosglasfaser-verstärkte thermoplastische Material eine Schicht in einem Laminat ist.

14. Laminat umfassend:
eine erste Schicht mit einer ersten Oberfläche und einer gegenüberliegenden zweiten Oberfläche; und
eine zweite Schicht mit einer ersten Oberfläche und einer gegenüberliegenden zweiten Oberfläche,
wobei die erste Oberfläche der ersten Schicht an die erste Oberfläche der zweiten Schicht gebunden ist, und
wobei sowohl die erste als auch die zweite Schicht durch das Endlosglasfaser-verstärkte thermoplastische Material nach einem der vorstehenden Ansprüche definiert sind.

15. Überspritzter Gegenstand umfassend:
eine Polymerzusammensetzung, gebunden an ein Substrat,
wobei das Substrat das Endlosglasfaser-verstärkte thermoplastische Material nach einem der vorstehenden Ansprüche umfasst.

## Revendications

1. Matériau thermoplastique renforcé par des fibres de verre continues comprenant :
une matrice de polymère comprenant, sur la base d'un poids total de la matrice de polymère :
20 % en poids à 40 % en poids d'un composant polyvinylbutyral ;
50 % en poids à 79,5 % en poids d'un composant polyoléfine, le composant polyoléfine comprenant du polyéthylène, du polypropylène, ou une combinaison de ceux-ci,
0,5 % en poids à 5 % en poids d'un agent compatibilisant à fonction anhydride maléique ; et
50 % à 80 % en poids d'une pluralité de fibres de verre continues, par rapport au poids total du matériau thermoplastique renforcé par des fibres de verre continues.

2. Matériau thermoplastique renforcé par des fibres de verre continues selon la revendication 1, dans lequel le matériau thermoplastique renforcé par des fibres de verre continues comprend 20 % en poids à 50 % en poids de la matrice de polymère, sur la base du poids total du matériau thermoplastique renforcé par des fibres de verre continues.

3. Matériau thermoplastique renforcé par des fibres de verre continues selon l'une quelconque des revendications précédentes, dans lequel la pluralité de fibres de verre continues s'étendent sur la totalité ou sensiblement la totalité, c'est-à-dire plus de 75 %, d'une dimension du matériau thermoplastique renforcé par des fibres de verre continues,
et/ou dans lequel chacune des fibres de verre continues de la pluralité de fibres de verre continues a une longueur, les longueurs des fibres de verre continues dans la pluralité de fibres continues étant sensiblement parallèles,
et/ou dans lequel chacune des fibres de verre continues de la pluralité de fibres de verre continues comprend une composition d'encollage, la composition d'encollage comprenant au moins l'un parmi un agent filmogène, un lubrifiant, et un agent de couplage,
et/ou dans lequel la pluralité de fibres continues ont un diamètre moyen de 12 µm à 24 µm,
et/ou dans lequel la pluralité de fibres continues présentent une densité linéaire moyenne de masse de 2 200 TEX à 600 TEX,
et/ou dans lequel la pluralité de fibres continues forment des mèches à une seule extrémité parallèles incorporées dans la matrice de polymère, les mèches à une seule extrémité parallèles étant continues dans un sens de la longueur du matériau thermoplastique renforcé par des fibres de verre continues, le matériau thermoplastique renforcé par des fibres de verre continues comportant une moyenne de 1 à 3 mèches par cm, lorsque mesuré dans le sens de la largeur.

4. Matériau thermoplastique renforcé par des fibres de verre continues selon l'une quelconque des revendications précédentes, dans lequel la matrice de polymère comprend 1 % en poids à 3,5 % de fonction anhydride maléique, par rapport au poids total de la matrice de polymère, de préférence dans lequel la matrice de polymère comprend 2 % en poids à 3 % d'agent compatibilisant à fonction anhydride maléique, par rapport au poids total de la matrice de polymère.

5. Matériau thermoplastique renforcé par des fibres de verre continues selon l'une quelconque des revendications précédentes, dans lequel l'agent compatibilisant à fonction anhydride maléique comprend 0,5 % en poids à 1,5 % en poids de groupe fonctionnel anhydride maléique, sur la base du poids total de l'agent compatibilisant à fonction anhydride maléique,
et/ou dans lequel l'agent compatibilisant à fonction anhydride maléique comprend un polypropylène greffé avec de l'anhydride maléique, un polyéthylène greffé avec de l'anhydride maléique, ou une combinaison de ceux-ci.

6. Matériau thermoplastique renforcé par des fibres de verre continues selon l'une quelconque des revendications précédentes, dans lequel la matrice de polymère comprend 22 % en poids à 35 % en poids du polyvinylbutyral, par rapport au poids total de la matrice de polymère, de préférence dans lequel la matrice de polymère comprend 24 % en poids à 28 % en poids du composant polyvinylbutyral, par rapport au poids total de la matrice de polymère.

7. Matériau thermoplastique renforcé par des fibres de verre continues selon l'une quelconque des revendications précédentes, dans lequel le composant polyvinylbutyral comprend du polyvinylbutyral vierge, du polyvinylbutyral recyclé, ou une combinaison de ceux-ci.

8. Matériau thermoplastique renforcé par des fibres de verre continues selon l'une quelconque des revendications précédentes, dans lequel le composant polyvinylbutyral comprend un plastifiant, et/ou dans lequel le composant polyvinylbutyral comprend un plastifiant dans la gamme de 0 % en poids à 30 % en poids, par rapport au poids total du composant polyvinylbutyral, de préférence dans lequel le composant polyvinylbutyral comprend un plastifiant dans la gamme de 10 % en poids à 30 % en poids, par rapport au poids total du composant polyvinylbutyral.

9. Matériau thermoplastique renforcé par des fibres de verre continues selon la revendication 8, dans lequel le composant polyvinylbutyral comprend un plastifiant comprenant du bis(2-éthylhexanoate) de triéthylèneglycol, du di-n-heptanoate de tétraéthylèneglycol, du sébacate de dibutyle, de l'adipate de dihexyle, de l'adipate de dioctyle, de l'adipate d'hexyle et de cyclohexyle, ou une combinaison de ceux-ci.

10. Matériau thermoplastique renforcé par des fibres de verre continues selon l'une quelconque des revendications précédentes, dans lequel le composant polyoléfine comprend au moins un polymère de polyéthylène,
et/ou dans lequel le composant polyoléfine comprend au moins un polymère de polypropylène, de préférence dans lequel l'au moins un polymère de polypropylène est choisi dans le groupe constitué par un homopolymère de polypropylène, un copolymère de résistance aux chocs de polypropylène et un copolymère statistique de polypropylène ou dans lequel l'au moins un polymère de polypropylène comprend un copolymère de polypropylène qui comprend au moins 85 % d'unités monomériques de propylène, sur la base d'un total d'unités monomériques dans le copolymère de polypropylène.

11. Matériau thermoplastique renforcé par des fibres de verre continues selon l'une quelconque des revendications précédentes, dans lequel la matrice de polymère comprend une quantité inférieure ou égale à 2,5 % en poids de charges minérales, sur la base du poids total de la matrice de polymère,
et/ou dans lequel le matériau thermoplastique renforcé par des fibres de verre continues est un ruban unidirectionnel
et/ou dans lequel le matériau thermoplastique renforcé par des fibres de verre continues présente un poids surfacique de 200 g/m² à 600 g/m²,
et/ou dans lequel le matériau thermoplastique renforcé par des fibres de verre continues présente une résistance à la traction qui se situe dans les 20 % d'une résistance à la traction à la rupture d'un matériau thermoplastique renforcé par des fibres de verre continues similaire qui est identique, sauf qu'il ne comprend pas le composant polyvinylbutyral, telle que mesurée selon la norme ASTM D638-14 à 23 °C et une vitesse de déformation de 0,2 pouce/minute
et/ou dans lequel le matériau thermoplastique renforcé par des fibres de verre continues présente un module de traction qui se situe dans les 20 % d'un module de traction d'un matériau thermoplastique renforcé par des fibres de verre continues similaire qui est identique sauf qu'il ne comprend pas le composant polyvinylbutyral, tel que mesuré selon la norme ASTM D638-14 à 23 °C et une vitesse de déformation de 0,2 pouce/minute,
et/ou dans lequel le matériau thermoplastique renforcé par des fibres de verre continues présente une résistance à la flexion qui se situe dans les 40 % de la résistance à la flexion d'un matériau thermoplastique renforcé de fibres de verre continues similaire qui est identique, sauf qu'il ne comprend pas le composant polyvinylbutyral, telle que mesurée selon la norme ASTM D790-17 à 23 °C et une vitesse de déformation de 0,05 pouce/minute,

12. Matériau thermoplastique renforcé par des fibres de verre continues selon l'une quelconque des revendications précédentes, dans lequel le matériau thermoplastique renforcé par des fibres de verre continues a un module de flexion qui se situe dans les 20 % d'un module de flexion d'un matériau thermoplastique renforcé par des fibres de verre continues similaire qui est identique sauf qu'il ne comprend pas le composant polyvinylbutyral, tel que mesuré selon la norme ASTM D790-17 à 23 °C et une vitesse de déformation de 0,05 pouce/minute.

13. Matériau thermoplastique renforcé par des fibres de verre continues selon l'une quelconque des revendications précédentes, dans lequel le matériau thermoplastique renforcé par des fibres de verre continues est une couche dans un stratifié.

14. Stratifié comprenant :
une première couche ayant une première surface et une deuxième surface opposée ; et
une deuxième couche ayant une première surface et une deuxième surface opposée,
dans lequel la première surface de la première couche est liée à la première surface de la deuxième couche, et
dans lequel chacune des première et deuxième couches sont définies par le matériau thermoplastique renforcé par des fibres de verre continues selon l'une quelconque des revendications précédentes.

15. Article surmoulé comprenant :
une composition polymérique liée à un substrat,
dans lequel le substrat comprend le matériau thermoplastique renforcé par des fibres de verre continues selon l'une quelconque des revendications précédentes.
